(19) **Europäisches Patentamt / European Patent Office / Office européen des brevets**

(11) **EP 1 855 543 B1**

(12) **EUROPEAN PATENT SPECIFICATION**

(45) Date of publication and mention
of the grant of the patent:
**28.04.2010 Bulletin 2010/17**

(51) Int Cl.:
***A23K 1/175*** (2006.01)  ***A23K 1/18*** (2006.01)

(21) Application number: **06707101.9**

(22) Date of filing: **21.02.2006**

(86) International application number:
**PCT/EP2006/001521**

(87) International publication number:
**WO 2006/092214 (08.09.2006 Gazette 2006/36)**

(54) **USE OF LANTHANUM CARBONATES FOR THE REDUCTION OF DIGESTIBILITY OF PHOSPHORUS IN ANIMAL NUTRITION**

VERWENDUNG VON LA KARBONATE ZUR VERRINGERUNG DER VERDAULICHKEIT VON PHOSPHOR IN DER TIERERNÄHRUNG

UTILISATION DES CARBONATES DE LA POUR LA RÉDUCTION DE LA DIGESTIBILITÉ DE PHOSPHORE DANS LA NUTRITION ANIMALE

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.03.2005 EP 05004395**

(43) Date of publication of application:
**21.11.2007 Bulletin 2007/47**

(73) Proprietor: **Bayer Animal Health GmbH 51368 Leverkusen (DE)**

(72) Inventors:
• **SCHMIDT, Bernard**
  **51789 Lindlar (DE)**
• **SPIECKER-HAUSER, Ute**
  **40822 Mettmann (DE)**
• **MERTIN, Dirk**
  **40764 Langenfeld (DE)**

(56) References cited:
**WO-A-2004/016553    US-A- 5 968 976**

• **PATENT ABSTRACTS OF JAPAN vol. 011, no. 371 (C-462), 3 December 1987 (1987-12-03) & JP 62 145024 A (ASAHI CHEM IND CO LTD), 29 June 1987 (1987-06-29) cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to novel animal feeds containing lanthanide compounds, as well as to the use of lanthanide compounds for reducing the digestibility of phosphorus contained in animal feeds.

Dietary phosphate restriction is a recommended strategy for preventing premature deterioration of renal function or for slowing down the progression of existing chronic renal insufficiency in mammalian species, particularly carnivores such as cats and dogs. A number of special pet diet brands with reduced phosphate contents are available on the market. However, phosphate restriction in feeds for example for carnivores is technically problematical due to the fact that meat proteins naturally contain abundant amounts of phosphate organically bound in glycerol phosphatides such as lecithins and phosphatidyl colamines, phosphatidyl serines, or phosphatidyl inositols, and also in mono- and poly-nucleotides including the DNA and (m)RNA, in inositol phosphates, and in other endogenous molecules. This vast over-supply of phosphates can be partly reduced by replacing meat by milk protein, although only at the expense of palatability and consequently feed acceptance by the target species.

Basically, the use of intestinal phosphate binders could serve to further reduce phosphorus digestibility beyond the limits of dietary protein/phosphate restriction. However, the use of classical phosphate binders such as calcium or aluminium compounds, has proven disappointing in terms of the risk/benefit ratio or palatability. While they may help to control the finely tuned circulating serum phosphate levels in the case of patients suffering from late stage chronic renal failure, their use for the management of mild to moderate chronic renal insufficiency prior to the occurrence of hyperphosphatemia is not common practice. In addition, many expert veterinarian nephrologists question their benefit unless they are given to animals in conjunction with feeds already restricted in protein/phosphate.

There is therefore a need for non-toxic agents which can be used as a feed additive for decreasing phosphate digestibility in basically any animal feed while maintaining the palatability of the feed concerned.

The potent phosphate-binding capacity of rare earth metal ions has recently attracted the awareness of human nephrologists, especially because they are not absorbed in relevant quantities after oral ingestion by mammals and hence show very low oral toxicity according to the Hodge-Sterner classification system (Am. Ind. Hyg. Assoc. Quart. 10: 93, 1943). Their potential use for immobilizing phosphate ions in body fluids such as blood has been disclosed in Japanese Published Patent Application (Kokai) No. 62-145024. Lanthanum salts, in particular lanthanum carbonates and oxycarbonates, have been further proposed as pharmaceutical treatments of hyperphosphatemia in patients with advanced chronic renal failure (WO 96/30029, WO 2004/016553), because hemodialysis fails to sufficiently remove phosphate ions from the blood, so that the levels constantly rinse. In addition, the therapeutic use of rare earth metal compounds, including lanthanum salts, has been recently claimed to be useful for the prevention of kidney stones - due to their absorption of oxalate (WO 02/085348) or for treating or preventing hypercalcemia (WO 03/094933) and for treating bone diseases (WO 02/002277).

Although the control of pre-existing hyperphosphatemia in human patients with end-stage renal disease by the therapeutic administration of pharmaceutical compositions of lanthanum compounds is now state of the art, the dietary use of such compounds in nutritional strategies for protecting animals from the threat of excess phosphate bioavailability has not so far been addressed. Both strategies rely on the phosphate binding properties of the compounds in vitro, although they do differ in quite important respects: While the pharmaceutical treatment aims to reverse a pathological state such as hyperphosphatemia, the basic goal of the nutritional approach is to support the physiological function of the kidneys of subjects in good health. Indeed, the therapeutic modification of the finely tuned hemostasis of phosphate may already be achieved with minor changes in phosphate absorption from the gastrointestinal tract in vivo, which do not lead to detectable changes in phosphate digestibility and hence are not of long-term nutritional benefit. It has been seriously questioned that conventional phosphate binders (in particular calcium and aluminium compounds) can bring about an important reduction in the phosphorus digestibility of feeds due to the abundance of dietary phosphates which largely exceed the physiological requirements of the consumer's organism.

We have now discovered that certain forms of lanthanide compounds are surprisingly, capable of safely producing a potent and physiologically significant reduction in the digestibility of phosphorus of animal feeds, even when added to commercial feeds containing abundant amounts of phosphorus, while at the same time having no negative impact on the palatability of these diets.

Hence, this invention relates to the use of a lanthanide compound as a feed additive in animal nutrition for reducing the digestibility of phosphorus in animal feeds, as claimed.

It is well known that lanthanide salts often form hydrates and/or oxy-salts (such as the examples given above). Suitable hydrates may also be used according to the invention. For the reasons mentioned above, the present invention is particularly useful for animals whose diet comprises elevated amounts of phosphorus (usually from meat), such as, dogs and especially cats.

In the context of the present invention, the term 'phosphorus' refers to dietary phosphorus which occurs naturally and is absorbed from the gastrointestinal tract mainly in the form of organically bound or inorganic phosphate. In blood, bones, urine and faeces, phosphates are the predominant forms in which phosphorus occurs. Phosphates cannot however be quantified in feeds and faeces, which are therefore usually ashed and the resulting inorganic phosphorus oxides are quantified in the dry matter by state of the art techniques. The difference between the calculated amount of ingested phosphorus and the amount excreted with the faeces is considered to be the amount absorbed from the gastrointestinal tract. Phosphorus digestibility is therefore calculated by the equation

$$\text{apparent digestibility of phosphorus} = \frac{\text{phosphorus in feed} - \text{phosphorus in faeces}}{\text{phosphorus in feed}} \times 100$$

A reduction in dietary phosphorus digestibility is beneficial for mammalian organisms and in particular for species consuming meat such as carnivores, because their feeds generally contain more phosphates than they actually need for maintaining their physiological functions. The amount of phosphate absorbed in excess of the physiologically required amounts must be excreted mainly via the kidneys. Otherwise, soft tissue mineralization, disturbances in calcium metabolism, secondary hyperparathyroidism and many other sequels of hyperphosphatemia impair the health of the organist in the long term. The phosphate-eliminating organs, i.e. the kidneys, are at particular risk of damage by an over-supply of phosphates, thus leading to further impairments of phosphate elimination and finally resulting in an ultimately lethal vicious circle.

As long as the renal function is normal and sufficient to remove all excess phosphates from the blood, the blood levels of phosphate are kept within narrow limits. Any reduction in phosphorus (phosphate) digestibility is welcome in order to avoid an unnecessary burden on the kidneys and thereby protect their functionality for good health and long life.

Usually, a physiologically significant reduction in the systemic phosphate supply can be achieved if 10-80% of the digestible phosphorus in a diet is reduced. The amounts of lanthanides to be added to the feeds in order to achieve this goal are of course dependent on the quantity of digestible phosphates contained therein. As a general rule, an amount of lanthanide compound corresponding to 0.1 - 100g of an elemental lanthanide (preferably 0.5 - 50 g) should be added per kg of dry feed mass, the lower range being preferably used for diets already restricted in phosphorus by state of the art techniques and the higher range for diets rich in phosphorus.

Unexpectedly, it has been found that even the addition of high amounts of lanthanide compounds to animal feeds does not significantly reduce the palatability of the animal feed. This is particularly surprising since cats are very sensitive to changes in their food, whether in smell, taste, mouthfeel or otherwise.

The lanthanide compound may be added to the animal feed during production and thus becomes an integral part of the animal feed. However, it is also possible for the lanthanide compound itself or a suitable composition containing same to be added to the animal feed by the animal's carer e.g. before presenting the feed to the animal.

Although a stoichiometric relationship between the phosphoruss contained in the feed and the lanthanide compound aimed at reducing the digestibility of this phosphorus is clearly preferred, it is also possible to use the lanthanide compound or suitable formulations thereof for the preparation of dietary supplements which are administered to the animals separately from, but in close conjunction with feeding such as for example immediately after feeding. The total dose of lanthanide compound to be administered in dietary supplements should provide a ratio of lanthanide to dry feed in the range outlined above.

The lanthanide compound may be used per se as a feed additive without adding any additional ingredients (such as excipients etc.), e.g. for the commercial production of feedstuffs, in which case the compound is preferably added in the form of a powder. The preparation of pre-mixes containing the lanthanide compound as well as further ingredients (e.g. formulation aids) is also possible and is usually a great help for achieving homogeneous distribution in the feed

The feed additive may also be formulated as a composition containing further formulation aids. Such feed additive compositions may take the form of a powder or a granular product. The term feed additive according to the present invention also comprises dietary supplements which are given to the animal separately from the meals but with the same goal of reducing the digestibility of phosphorus contained in the animal's feed. Such dietary supplements are typically solid formulations e.g. in the form of tablet, chewables etc. Fluid products can also be used, such as suspensions, which - depending on their viscosity - may be in the form of liquids, gels or pastes. Solutions of lanthanide salts can for example be used in the industrial preparation of feeds, e.g. during the preparation of pre-mixes or dietary supplements. The use of liquids containing dissolved lanthanides as feed additives to be added to ready-to-use feeds, for instance by the owner of a cat or dog, is, however, not recommended due to the fact that dissolved compounds usually can be more effectively absorbed via the stomach compared with suspended or solid formulations of less soluble lanthanide salts.

Suitable further ingredients in dry granular or powdery formulations can be inert ingredients, such as starch (e.g. corn starch) or cellulose (e.g. microcrystalline cellulose). Furthermore other auxiliaries like silica gel may be added.

Mixtures of different ingredients can also be used. Such dry formulations usually contain the lanthanide compound in amounts of 1 to 90% (w/w), preferably 5 to 80 % (w/w), particularly preferable 5 to 70 % (w/w).

The fluid products are preferably aqueous suspensions.

Such fluid products typically contain 1 to 90 %(w/w), preferably 5 to 80 %(w/w), particularly preferably 5 to 60 %(w/w) of the lanthanide compound.

The suspensions preferably contain a thickener like xanthan gum, cellulose and/or cellulose derivatives, for example a mixture of microcrystalline cellulose and carboxymethyl cellulose or other cellulose ethers (e.g. methyl cellulose). Mixtures of different thickeners may also be used. Depending on the thickener used typical concentrations are in the range of 0.1 to 5.0 %(w/w), preferably 0.1 to 3.0 %(w/w).

Moreover the suspensions preferably contain an aliphatic di- or trivalent alcohol with up to 5 carbon atoms, e.g. propylene glycol or glycerol, or a mixture thereof. The suspensions generally contain the aliphatic di- or trivalent alcohol in a concentration of 5 to 30 %(w/w), preferably 8 to 20 %(w/w).

The suspensions may contain a solubilizer, which is preferably a surfactant, e.g. a polysorbate or a mono- or diglyceride. Concentrations are typically in the range of 0.1 to 10 % (w/w), preferably 0.5 to 5 % (w/w).

In case the formulation contains ingredients that are not sufficiently soluble in water,: the solubilizer may help to form a homogeneous solution or emulsion; for example in case the formulation contains an oil, e.g. fish-oil.

The suspensions may contain further customary pharmaceutical auxiliaries for example preservative, e.g. methyl paraben or sorbic acid.

Vitamin E or a vitamin E source like $\alpha$-tocopherol acetate may be administered together with the lanthanide compound, preferably as a further ingredient in the respective preparation.

It is believed that based on the above description, one skilled in the art can utilize the present invention to its fullest extent without any further elaboration being necessary. The following examples are, therefore, to be considered as merely illustrative and by no means limitative.

**Examples:**

**A. Example of the preparation of a complete food for pets:**

A complete food is prepared according to state of the art techniques using appropriate amounts of ingredients to cover at least all of the basic nutritive requirements of the target animal species. A pre-mix of the lanthanide compound is advantageously prepared, for example using corn starch as a carrier in order to facilitate the homogenous distribution in the feed. The resulting complete food, containing for instance 1, 5 or 10 g lanthanum carbonate octahydrate per kg complete food (dry mass), may be further processed in order to achieve commercial or experimental complete foods in suitable presentations.

**B. Examples of the formulation of dietary supplements:**

Formulation example 1:

An amount of 0.1 g of sorbic acid is dissolved in 10 g of propylene glycol and 0.5 g of xanthan gum are dispersed in the mixture, In a second container, 10 g of lanthanum carbonate octahydrate are dispersed in 50 g of water. The xanthan gum suspension is added with vigorous stirring to the suspension of lanthanum carbonate. Water is added to obtain a final volume of 100 ml. The resulting suspension is filled into suitable applicators to provide dosing of the dietary supplement with sufficient accuracy.

Formulation example 2:

A mixture of 0.1 g of methyl paraben and 2.0 g of microcrystalline cellulose/sodium carboxymethyl cellulose (Avicel CL 611) is dispersed in 10 g of glycerol to form a pre-mix. In a second container, 50 g of lanthanum carbonate octahydrate are dispersed in 50 g of water. A mixture of 0.5 g of $\alpha$-tocopherol acetate and 1.0 g of polysorbate 80 is added to this suspension. Then the pre-mix described above is also added with vigorous stirring. The suspension is homogenised using a suitable technical device (e.g. a rotor-stator) and water is added to obtain a final volume of 100 ml. The final suspension can be portioned in 1.0 ml aliquots and packed into suitable disposable containers; e.g., cachets.

Formulation example 3:

3.0 g of glyceryl citrate lactate linoleate oleate (Imwitor 375) are dissolved in 6.5 g of fish oil while heating to 80°C. This solution is added with intense stirring to 40 g of water heated to 80°C and the mixture is cooled to ambient temperature. Then, 50 g of lanthanum carbonate octahydrate are suspended in this emulsion. Water is added to obtain a final volume of 100 ml. The resulting suspension is filled into suitable applicators, to provide dosing of the' dietary supplement with sufficient accuracy.

Formulation example 4:

A pre-weighed amount of 50 g of lanthanum carbonate octahydrate is thoroughly mixed with 48 g of corn starch and 2 g of highly dispersed silica (e.g. Aerosil 200). The resulting homogeneous powder mixture can be portioned in 1.0 ml aliquots and packed into suitable disposable containers, e.g. sachets, or alternatively filled into a bigger container equipped with a suitable dosing aid.

Formulation example 5:

500 g of Lanthanum carbonate octahydrate 300 g of corn starch, and 185 g of microcrystalline cellulose are thoroughly mixed and granulated with 100 ml of a 5% (m/v) aqueous solution of methyl hydroxypropyl cellulose 3cSt (Pharmacoat 603). After sieving, the moist granulate is dried at 50°C by a state of the art method and admixed with 10g of colloidal anhydrous silica (Aerosil 200). The final formulation is packed into suitable containers for applying multiple or single doses of 3.0 g.

Formulation example 6:

An amount of 0.2 kg of methyl paraben is dissolved in 25 kg purified water at 80°C. After addition of 54.41 kg cold water 10.0 kg lanthanum carbonate octahydrate and 0.194 kg Covitol 700 WD (d-$\alpha$-tocopheryl acetate, a vitamin E source) are dispersed in this solution. In a second container 0.7 kg xanthan gum are dispersed in 20.0 kg glycerol. The xanthan suspension is added to the suspension of lanthanum carbonate with vigorous stirring, yielding 100 liters suspension.

Formulation example 7:

An amount of 0.2 kg of methyl paraben is dissolved in 25 kg purified water at 80°C. After addition of 50.41 kg cold water 20.0 kg lanthanum carbonate octahydrate and 0.388 kg Covitol 700 WD (d-$\alpha$-tocopheryl acetate, a vitamin E source) are dispersed in this solution. In a second container 0.6 kg xanthan gum are dispersed in 20.0 kg glycerol. The xanthan suspension is added to the suspension of lanthanum carbonate with vigorous stirring, yielding 100 liters suspension.

## C. Biological examples

biological example 1:

Within the context of a larger study, 24 adult healthy domestic cats of both genders, individually fed with a commercially available regular canned diet ('Petley's Gourmet Supreme Beef Casserole', PROMEAL, (PTY) Ltd., containing 0,19% phosphorus corresponding to 1,13% phosphorus in the dry matter), were randomised to three equal groups of eight animals which were fed for two weeks with dose levels corresponding to 0, 0.3, and 3.0 grams of lanthanum carbonate octahydrate per kg of feed in their daily feed ration.

During the study the amount of food consumed was recorded daily and the animals were observed daily for the possible occurrence of adverse events. In the faeces collected over a three-day sampling period at the end of the study, the phosphorus levels were measured. On comparing the dietary intake of phosphorus with the excretion of phosphorus in the faeces, the apparent phosphorus digestibility was calculated according to the following equation:

$$\text{Apparent digestibility of phosphorus} = \frac{\text{phosphorus in the feed - phosphorus in the faeces}}{\text{phosphorus in the feed}} \times 100$$

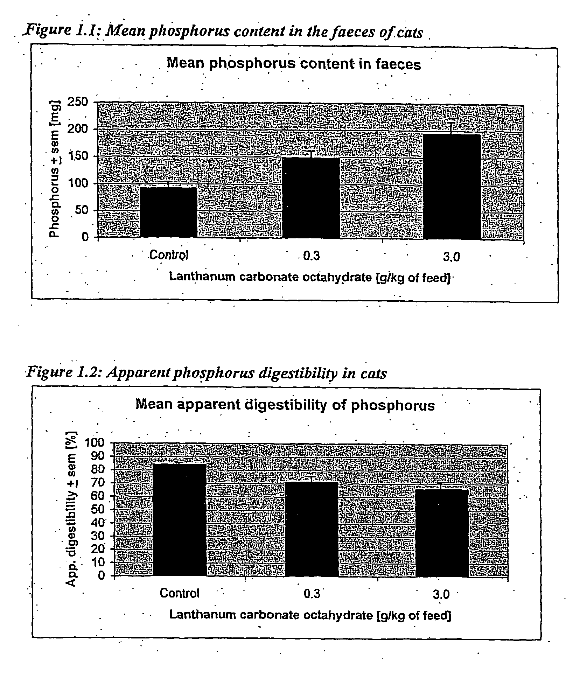

The addition of lanthanum carbonate dose-dependently increased the phosphorus content in the faeces (Figure 1.1), thus indicating that less phosphorus was absorbed via the gastrointestinal tract in cats fed on a diet enriched with lanthanum carbonate. The apparent phosphorus digestibility which takes into account the amount of phosphorus ingested with the feed showed a corresponding decrease as a result of the addition of the Lanthanum compound (Figure 1.2). This result is quite remarkable in view of the fact that the diet used in this study was quite rich in phosphorus.

The addition of the lanthanide compound to the diet had no negative effect on feed acceptance and tolerance in the study animals.

Biological example 2:

A total of twelve adult healthy female beagle dogs were individually fed with a commercially available regular canned feed ('Eukanuba Adult with much lamb', IAMs Pet Food Ltd., containing 0,25% of phosphorus corresponding to 1,09% phosphorus in the dry matter). At weekly intervals, their diet was supplemented with increasing amounts of lanthanum carbonate octahydrate, thus resulting in final concentrations of the feed additive of 0, 1.75, 5.0, and 17.5 g of lanthanum carbonate octahydrate per kg of feed.

During the study the amount of food consumed was recorded daily and the animals were observed daily for the possible occurrence of adverse events. In the faeces collected over a two-day sampling period at the end of the study, the phosphorus levels were measured. On comparing the dietary intake of phosphorus with the excretion of phosphorus in the faeces, the apparent phosphorus digestibility was calculated according to the following equation:

$$\text{apparent digestibility of phosphorus} = \frac{\text{phosphorus in the feed} - \text{phosphorus in the faeces}}{\text{phosphorus in the feed}} \times 100$$

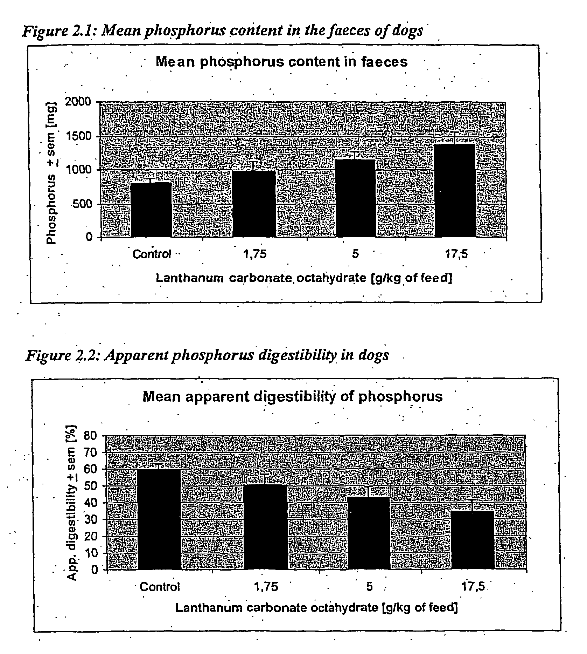

The addition of lanthanum carbonate dose-dependently increased the phosphorus content in the faeces (Figure 2.1), thus indicating that less phosphorus was absorbed via the gastrointestinal tract in dogs fed on a diet enriched with lanthanum carbonate. The apparent phosphorus digestibility which takes into account the amount of phosphorus ingested with the feed showed a corresponding decrease as a result of the addition of the lanthanum compound (Figure 2.2). This result is quite remarkable in view of the fact that the feed used in this study was quite rich in phosphorus.

The addition of the lanthanide compound to the diet had no negative effect on feed acceptance and tolerance in the study animals.

Biological example 3:

Fifteen adult healthy domestic cats of both genders were individually fed with commercially available regular canned diet (Premium Paté rich in lamb, IAMS Pet Food GmbH & Co containing 0.26 % of phosphorus corresponding to 1.13% phosphorus in the dry matter). The aim of the study was to assess the palatability and safety of lanthanum carbonate octahydrate especially in high doses. Therefore 10 cats were fed lanthanum carbonate octahydrate in their daily feed rational increasing doses. The study began with a dose level of about 12-15 g per kg of feed (dry matter). The dose was doubled every two weeks up to a dose level of about 96-120 g per kg of feed (dry matter). Five cats were given the feed without any lanthanum carbonate octahydrate and served as control.

Palatability was assessed daily by observing the general acceptance of the feed. Tolerability and safety were assessed by measuring the blood serum phosphate levels and body weight at regular intervals as well as by daily observations concerning the health status and the possible occurrence of adverse events.

Up to a dose level of 1g/kg of body weight (= about 108 mg per kg of dry feed), there were no changes in the serum phosphate levels, no changes in body weight and no limiting adverse events.

The acceptance of the diet was 100%, even at 4g of lanthanum carbonate octahydrate per 150g of the feed, which is quite obviously a large amount of powder: Compared to the control cats no difference in the palatability or acceptance of the feed or its safety could be observed.

The addition of the lanthanide compound to the feed even in extremely high doses had no negative effect on feed acceptance and the tolerance of the study animals.

**Claims**

1. Use of a lanthanide compound which is a lanthanum carbonate or a hydrate thereof for the preparation of a feed additive in animal nutrition for reducing the digestibility of phosphorus in animal feeds of cats or dogs.

**2.** Use according to claim 1 for the preparation of a feed additive containing a lanthanide compound which is a lanthanum carbonate or a hydrate thereof suspended in an aqueous carrier.

**3.** Use according to claim 2 wherein the aqueous carrier comprises water and a thickener.

**4.** Use according to claim 3, wherein the thickener is xanthan gum.

**5.** Use according to any of claims 2 to 4 for the preparation of a feed additive which additionally comprises an aliphatic mono- or polyvalent alcohol with up to 5 carbon atoms.

**Patentansprüche**

**1.** Verwendung einer Lanthanoidverbindung, die Lanthancarbonat oder ein Hydrat davon ist, zur Herstellung eines Nahrungszusatzes in Tiernahrung zur Senkung der Verdaulichkeit von Phosphor in Tierfutter für Katzen oder Hunde.

**2.** Verwendung nach Anspruch 1 zur Herstellung eins Nahrungszusatzes, der eine Lanthanoidverbindung enthält, die Lanthancarbonat oder ein Hydrat davon ist, und in einem wässrigen Träger suspendiert ist.

**3.** Verwendung nach Anspruch 2, worin der wässrige Träger Wasser und ein Verdickungsmittel umfasst.

**4.** Verwendung nach Anspruch 3, worin das Verdickungsmittel Xanthanlösung ist.

**5.** Verwendung nach einem der Ansprüche 2 bis 4 zur Herstellung eines Nahrungszusatzes, der zusätzlich dazu einen aliphatischen ein- oder mehrwertigen Alkohol mit bis zu 5 Kohlenstoffatomen umfasst.

**Revendications**

**1.** Utilisation d'un composé de lanthanide qui est un carbonate de lanthane ou un hydrate de celui-ci pour la préparation d'un additif alimentaire dans la nutrition animale destinée à réduire la digestibilité du phosphore dans des alimentations pour animaux destinées aux chats ou aux chiens.

**2.** Utilisation selon la revendication 1 pour la préparation d'un additif alimentaire comprenant un composé de lanthanide qui est un carbonate de lanthane ou un hydrate de celui-ci mis en suspension dans un support aqueux.

**3.** Utilisation selon la revendication 2, dans laquelle le support aqueux comprend de l'eau et un épaississant.

**4.** Utilisation selon la revendication 3, dans laquelle l'épaississant est la gomme xanthane.

**5.** Utilisation selon l'une quelconque des revendications 2 à 4 pour la préparation d'un additif alimentaire qui comprend de plus un alcool mono- ou polyvalent aliphatique avec jusqu'à 5 atomes de carbone.

*Figure 1.1: Mean phosphorus content in the faeces of cats*

**Mean phosphorus content in faeces**

*Figure 1.2: Apparent phosphorus digestibility in cats*

**Mean apparent digestibility of phosphorus**

*Figure 2.1: Mean phosphorus content in the faeces of dogs*

*Figure 2.2: Apparent phosphorus digestibility in dogs*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62145024 A
- WO 9630029 A
- WO 2004016553 A
- WO 02085348 A
- WO 03094933 A
- WO 02002277 A

**Non-patent literature cited in the description**

- *Am. Ind. Hyg. Assoc. Quart,* 1943, vol. 10, 93